# DEMANDE DE BREVET EUROPEEN

(11) **EP 2 509 128 A1**
(43) Date de publication de la demande: **10.10.2012**
(21) Numéro de dépôt: 12354019.7
(22) Date de dépôt: 06.03.2012
(51) Int. Cl.: H01L 41/113

(54) **Procédé de commande à distance d'un appareil électrique et dispositif de commande pour la mise en oeuvre d'un tel procédé**

(30) Priorité: 08.04.2011 FR 1101078
(71) Demandeur: Schneider Electric Industries SAS, 92500 Rueil-Malmaison (FR)
(72) Inventeur: Vigouroux, Didier, 38050 Grenoble Cedex 09 (FR)
(74) Mandataire: Colette, Marie-Françoise

(57) **Abrégé**

La présente invention concerne un procédé de commande à distance d'un appareil électrique, ainsi qu'un dispositif pour la mise en oeuvre de ce procédé. Ce procédé est caractérisé en ce qu'il comporte une première séquence dite de premier actionnement d'un générateur et une seconde séquence dite de second actionnement dudit générateur, en ce qu'au cours de la première séquence, l'actionnement du générateur permet de stocker l'énergie du premier actionnement, de mémoriser l'information d'un ordre de commande à envoyer à l'appareil, et au cours de la seconde séquence, le second actionnement du générateur permet de stocker l'énergie de ce second actionnement, d'envoyer l'ordre de commande par l'intermédiaire de l'information d'un ordre de commande à envoyer mémorisée à la séquence 1, et d'envoyer l'information de la transmission effective de l'ordre de commande à l'appareil, vers un moyen de signalisation. Le dispositif comporte principalement une interface de commande destinée à être placée dans l'appareil, une télécommande (1) comportant deux boutons d'actionnement (5,6), une clé de manoeuvre (2) qui se détache pour être insérée temporairement dans l'interface de commande, et des moyens pour obliger l'opérateur à repositionner la clé de manoeuvre (2) à l'intérieur du boîtier de la télécommande (1) après usage.

## Description

La présente invention a pour objet un procédé de commande à distance d'un appareil électrique, ainsi qu'un dispositif de commande pour la mise en oeuvre d'un tel procédé.

La manoeuvre directe d'une cellule moyenne tension peut quelquefois susciter une certaine crainte justifiée par le bruit élevé de la manoeuvre, la crainte d'une erreur humaine pouvant entraîner la mise à la terre d'une partie de réseau sous tension, provoquant ainsi un court-circuit pouvant engendrer un bruit supplémentaire, ou bien l'apparition d'un arc interne sur un appareil défectueux.
Il est donc parfois nécessaire de lever la crainte de manoeuvrer directement la cellule moyenne tension par exemple, en donnant la possibilité de s'éloigner de quelques mètres de l'appareil à commander ou bien en quittant le local avec éventuellement la présence d'un mur entre le manipulateur et l'appareil à commander. Ainsi par exemple, dans le cas d'un appareillage aérien, associé à un contrôleur situé sur un poteau, le manipulateur pourra manoeuvrer en pied du poteau plutôt qu'en haut d'une échelle.

Il existe également des solutions câblées (télécommande filaire) qui par principe sont dédiées à un seul appareil (ou un groupe d'appareil), mais celles-ci sont installées en général sur des appareils prévus pour être manoeuvrées régulièrement.
On connaît des dispositifs de commande à distance pour des disjoncteurs tels que décrits dans les documents WO200952121 ou US2007064360 et l'on connaît également un dispositif d'appairage sécurisé entre la télécommande et l'objet commandé tel que décrit dans le brevet WO2007120892.

La présente invention a pour objet un procédé de commande à distance d'un appareil électrique de conception simple et peu onéreux, permettant de manoeuvrer à distance différents types d'appareils, cette télécommande pouvant être mise en oeuvre avantageusement sans fil et sans pile et permettant un appairage entre la télécommande et l'appareil commandé, ainsi qu'un dispositif pour sa mise en oeuvre.

A cet effet, la présente invention a pour objet un procédé de commande à distance d'un appareil électrique, ce procédé étant **caractérisé en ce qu'**il comporte une première séquence dite de premier actionnement d'un générateur et une seconde séquence dite de second actionnement dudit générateur, en ce qu'au cours de la première séquence, l'actionnement du générateur permet de stocker l'énergie du premier actionnement, de mémoriser l'information d'un ordre de commande à envoyer à l'appareil, et au cours de la seconde séquence, le second actionnement du générateur permet de stocker l'énergie de ce second actionnement, d'envoyer l'ordre de commande à l'appareil électrique par l'intermédiaire de l'information d'un ordre de commande à envoyer mémorisée à la première séquence, et d'envoyer l'information de la transmission effective de l'ordre de commande, vers un moyen de signalisation.

Selon une autre caractéristique, l'énergie produite lors du premier actionnement du générateur étant E1, l'énergie nécessaire au stockage de cette énergie et à la mémorisation de l'information d'un ordre de commande à envoyer étant E2, l'énergie produite lors du second actionnement du générateur étant E3, l'énergie nécessaire à l'envoi de l'ordre de commande étant E4 et E5 étant l'énergie nécessaire à l'envoi de l'information de transmission effective de l'ordre, on a E1+E3 = E2+E4+E5.

Selon une autre caractéristique, le générateur d'énergie précité comporte un bouton poussoir et ce générateur est actionné une première fois lors de l'appui sur ce bouton et est actionné une nouvelle fois lors de la relâche de ce bouton.

Selon une autre caractéristique, l'énergie précitée est stockée dans un condensateur.

Selon une autre caractéristique, l'ordre de commande à l'appareil électrique et l'information de transmission effective de cet ordre, sont transmis au moyen d'un système sans fil.

La présente invention a encore pour objet un dispositif de commande pour la mise en oeuvre de ce procédé, ce dispositif comportant un boîtier de commande locale situé à l'intérieur de l'appareil et comportant deux boutons permettant la commande respectivement de l'ouverture ou de la fermeture de l'appareil, un interrupteur à deux positions destiné à autoriser soit la commande locale soit la commande à distance dudit appareil, et un connecteur destiné à recevoir une clé permettant la manoeuvre à distance de l'appareil au moyen d'une télécommande.

Selon une autre caractéristique, les moyens de signalisation précités de l'information de la transmission effective de l'ordre de commande comportent une LED appartenant au boîtier logeant la télécommande.

Selon une autre caractéristique, ce dispositif comporte des moyens permettant de réaliser un appairage unique entre la télécommande et sa clé de manoeuvre.

Selon une autre caractéristique, le boîtier destiné à loger la télécommande comporte des moyens pour obliger l'opérateur à repositionner la clé de manoeuvre à l'intérieur dudit boîtier après usage.

Selon une autre caractéristique, ce boîtier est formé par un étui dont l'ouverture permet à la fois de libérer la clé de manoe.uvre et d'actionner les boutons de la télécommande.

Selon une autre caractéristique, l'étui précité comporte des moyens pour empêcher la fermeture dudit étui si la clé de manoeuvre n'est pas replacée préalablement dans son emplacement à l'intérieur de l'étui.

Selon une autre caractéristique, cet appareil est une cellule moyenne tension ou bien un disjoncteur de puissance.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective d'une télécommande appartenant à un dispositif de commande selon l'invention, en position fermée,
- La figure 2 est une vue en perspective de la même télécommande en position semi-ouverte,
- La figure 3 est une vue en perspective de la même télécommande en position ouverte, la clé de manoeuvre étant toujours à l'intérieur de la télécommande,
- La figure 4 est une vue identique à la précédente, la clé de manoeuvre étant retirée de l'étui,
- La figure 5 est une vue en perspective du boîtier de commande du disjoncteur, avant l'introduction d'une clé de manoeuvre,
- La figure 6 est une vue en perspective du boîtier de commande du disjoncteur, après l'introduction d'une clé de manoeuvre,
- Les figures 7 et 8 sont des vues en coupe, illustrant la télécommande en position ouverte respectivement sans clé de manoeuvre et avec une clé de manoeuvre à l'intérieur.
- La figure 9 est une vue en perspective, illustrant la partie intérieure de la télécommande dans la même position que dans la figure précédente,
- La figure 10 est une vue identique à la figure précédente, dans une position légèrement fermée de la télécommande,
- La figure 11 est une vue éclatée de la figure précédente,
- La figure 12 est une vue en perspective, illustrant la partie de la télécommande recevant la clé de manoeuvre,
- Les figures 13 et 14 sont des synoptiques électriques généraux, illustrant respectivement les deux séquences du procédé selon l'invention, et
- La figure 15 est une représentation illustrant deux schémas représentatifs de haut en bas de l'énergie produite par l'utilisateur du dispositif et de l'énergie consommée par le dispositif.

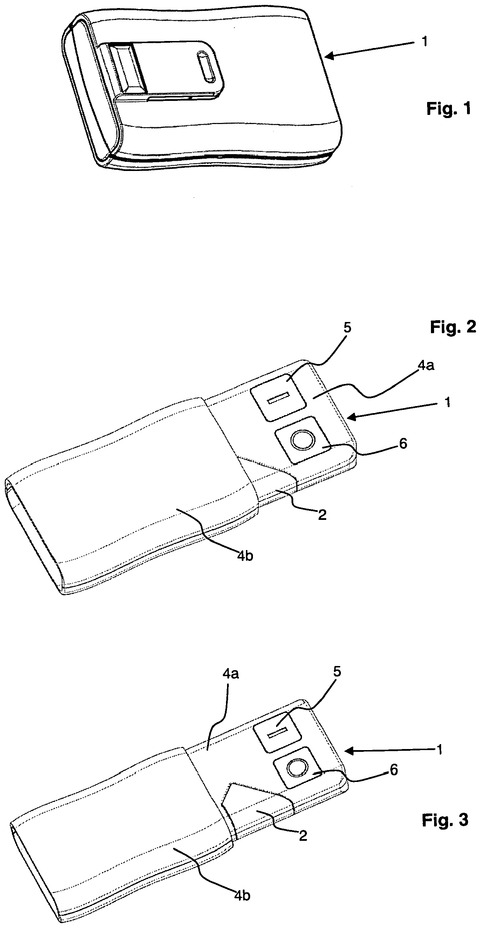

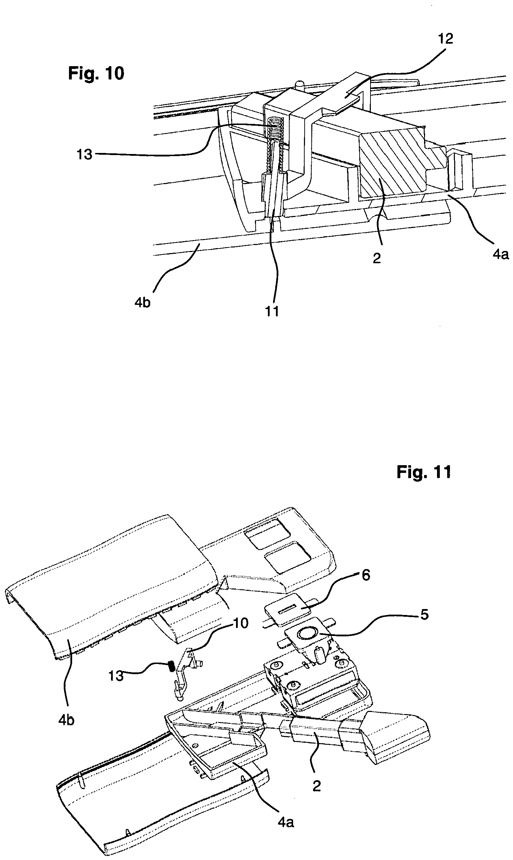

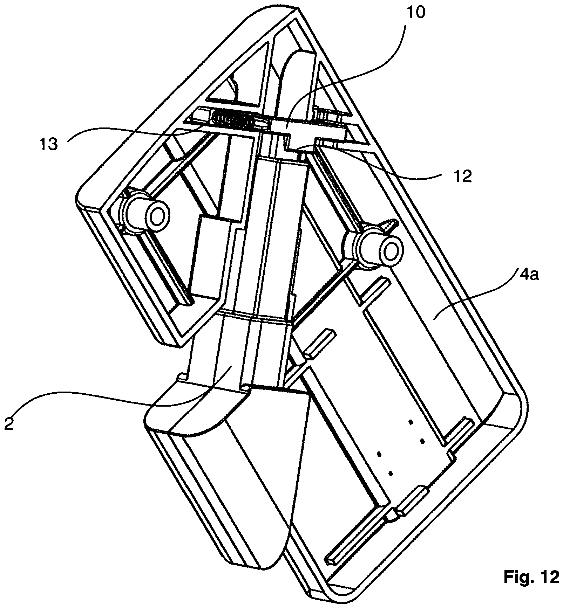

Sur les figures 1 à 4 et 7 à 12, on voit les différentes parties d'un dispositif de commande selon l'invention destiné à permettre la commande à distance d'un appareil électrique tel une cellule électrique moyenne tension ou un disjoncteur de puissance.
Ce dispositif comporte principalement une télécommande 1 et une clé de manoeuvre 2 destinée à être montée de manière amovible dans une interface de commande 3 de l'appareil pour être reliée au mécanisme de l'appareil au moyen d'un connecteur (non représenté). L'appareil comporte un mécanisme de commande motorisée, un boîtier de commande locale comportant deux boutons respectivement d'ouverture et de fermeture, un interrupteur destiné à autoriser la commande locale ou à distance de l'appareil et un indicateur de statut de l'appareil.

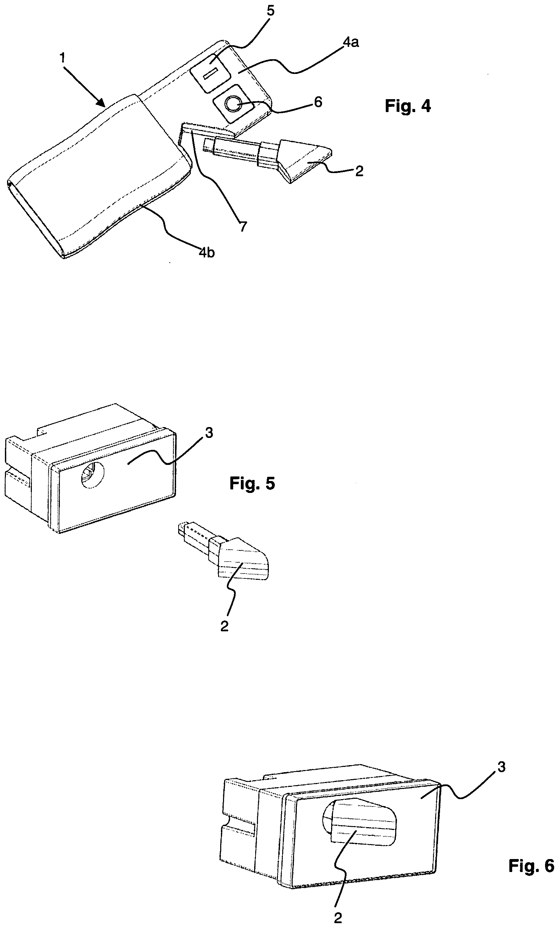

Sur la figure 1, cette télécommande 1 est en position fermée et présente une forme sensiblement parallélépipédique.
Cette télécommande 1 est formée par un étui 4 comportant deux parties 4a, 4b montées coulissantes l'une par rapport à l'autre. L'une 4a de ces parties, dite première, comporte le dispositif électrique de commande et présente à cet effet deux boutons 5,6 destinés à commander respectivement l'ouverture et la fermeture à distance de l'appareil, ainsi qu'un emplacement 7 destiné à recevoir la clé de manoeuvre 2. La seconde partie 4b de cet étui 4 présente une section transversale sensiblement rectangulaire, et comporte une ouverture dont la forme est adaptée à la forme extérieure de la première partie 4a de manière à permettre le coulissement de la première partie 4a à l'intérieur de la seconde partie 4b entre une position ouverte, telle qu'illustrée sur la figure 3 et une position fermée telle qu'illustrée sur la figure 1, en passant par la position semi-ouverte illustrée sur la figure 2. La position ouverte autorise le retrait de la clé de manoeuvre 2 de son emplacement 7 ainsi que l'accès aux boutons d'actionnement 5,6 de l'appareil et permet donc la commande à distance de l'appareil.
Cette clé de manoeuvre 2, une fois retirée de son emplacement 7, est destinée à être montée dans l'interface de commande 3 de l'appareil (tel qu'illustré sur les figures 5 et 6) pour être relié au mécanisme de l'appareil au moyen d'un connecteur (non représenté).

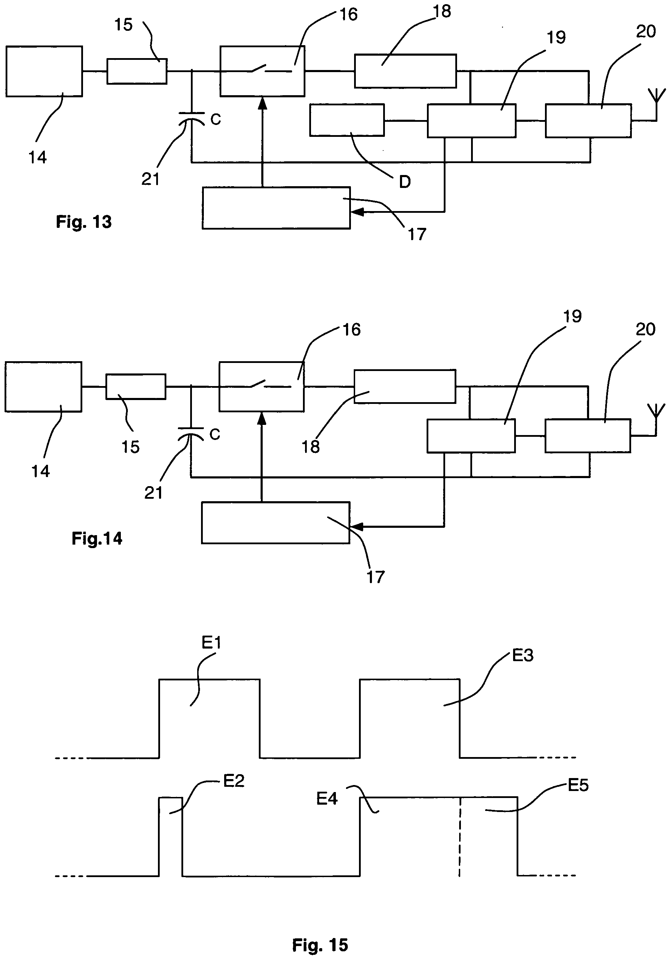

Conformément à l'invention, ce dispositif comporte des moyens 8 pour empêcher la fermeture de l'étui 4 de la télécommande si la clé de manoeuvre 2 n'a pas été préalablement replacée dans son emplacement 7 à l'intérieur de l'étui 4.
Ces moyens comportent un verrou 8 coopérant avec le boîtier de la seconde partie 4b de l'étui 4, ledit verrou 8 étant mobile entre une première position dans laquelle il est escamoté à l'intérieur de la première partie d'étui 4a, par le fait que la clé de manoeuvre 2 est introduite dans cette première partie d'étui 4a, et une position dans laquelle ce verrou 8 sort de la première partie 4a de l'étui et vient en contact avec une partie du boîtier de la seconde partie d'étui 4b lorsque la clé de manoeuvre est extraite de cette première partie d'étui 4a de manière à empêcher la fermeture de l'étui.
A cet effet, le verrou 8 comporte une partie en forme de pont 10 apte à recevoir à coulissement la clé de manoeuvre 2, ladite clé 2 étant apte à coulisser entre une partie de la première partie 4a de l'étui et ledit pont 10 lors de l'introduction de cette clé dans cette première partie d'étui ou lors de son extraction de celle-ci, la partie d'extrémité de ladite clé présentant une section transversale carrée coopérant avec l'ouverture du pont.
Ce pont 10 est également monté coulissant à l'intérieur de cette première partie 4a de l'étui entre une position basse dans laquelle l'élément de verrouillage 11 est sorti de la première partie d'étui 4a et coopère avec le boîtier de la seconde partie d'étui 4b, la clé de manoeuvre n'étant pas à l'intérieur du pont et une position haute du pont dans laquelle l'élément de verrouillage 11 est escamoté et libère ce boîtier, permettant le coulissement relatif des deux parties, la clé de manoeuvre étant introduite à l'intérieur du pont. Ce changement de position du pont est obtenu lors de l'introduction de la clé de manoeuvre, celle-ci coopérant avec une rampe 12 appartenant au pont 10, ce dernier étant rappelé en position basse par un ressort 13 en appui d'une part, sur le boîtier de la première partie d'étui 4a et d'autre part, sur le pont 10.
Cette télécommande permet d'opérer à distance car elle fonctionne sans fil avec un système de radio courte portée (par exemple ZigBee) opérant sur quelques dizaines de mètres. Ce qui lui permet de fonctionner à travers une paroi (mur, porte...). ZigBee est un protocole de haut niveau permettant la communication de petites radios à consommation réduite. Ce protocole intègre un cryptage des données assurant la sécurité des informations entre émetteurs et récepteurs.
De façon à éviter la manoeuvre intempestive d'un deuxième appareil situé à proximité et qui aurait par inadvertance une clé connectée à son boîtier de commande locale, il y a un appairage unique entre la télécommande et sa clé. A la fabrication de la télécommande et de sa clé, il est effectué un appairage définitif reposant sur l'adresse MAC de la radio ZigBee, garantissant l'impossibilité de commander deux clefs à partir d'une même télécommande.
Etant donné que les appareillages ne sont manoeuvrés que très rarement, en moyenne une fois tous les cinq ans, la télécommande n'utilise avantageusement que l'énergie apportée par l'appui sur les boutons d'actionnement pour alimenter l'émetteur radio situé dans la télécommande, alors que le récepteur radio, situé dans l'appareil, bénéficie de l'alimentation sauvegardée basse tension de la commande électrique.
Ainsi, la télécommande comporte deux générateurs d'énergie activés respectivement par appui sur deux boutons. Le principe décrit avec la technologie ZigBee peut aussi s'appliquer à d'autres technologies de communication sans fil (technologie Infra-rouge, par exemple....)
Le principe de séquencement va être décrit dans ce qui suit en référence aux figures 13 à 15.
Le circuit électrique destiné à permettre ce séquencement comporte les éléments suivants un générateur 14, un pont redresseur 15, un interrupteur 16, un dispositif de commande 17, un convertisseur d'énergie 18, un microcontrôleur 19 apte à mémoriser un datagram D, un émetteur/récepteur 20 et un condensateur 21.

Au cours de la séquence 1 illustrée sur la figure 13, un appui sur l'un des boutons ou générateurs 14 permet de stocker de l'énergie E1 dans le condensateur 21 et une partie E2 de cette énergie est utilisée pour mémoriser le datagram D à émettre. On se rapportera avantageusement à la figure 15 illustrant la production et la consommation d'énergie au cours de ces séquencements.
Au cours de la séquence 2 illustrée sur la figure 14, le relâchement du bouton ou du générateur permet de stocker de nouveau de l'énergie E3 dans le condensateur, d'envoyer le datagram mémorisé à la séquence 1, cette action consommant l'énergie E4, et d'envoyer un accusé de réception, ce qui consomme l'énergie E5.

Ainsi, de l'énergie est stockée par deux fois (lors de l'appui et lors de la relâche du générateur) avec émission d'un datagram uniquement lors de la relâche du bouton.

Le fonctionnement du dispositif de commande selon l'invention va être décrit dans ce qui suit en référence aux figures.

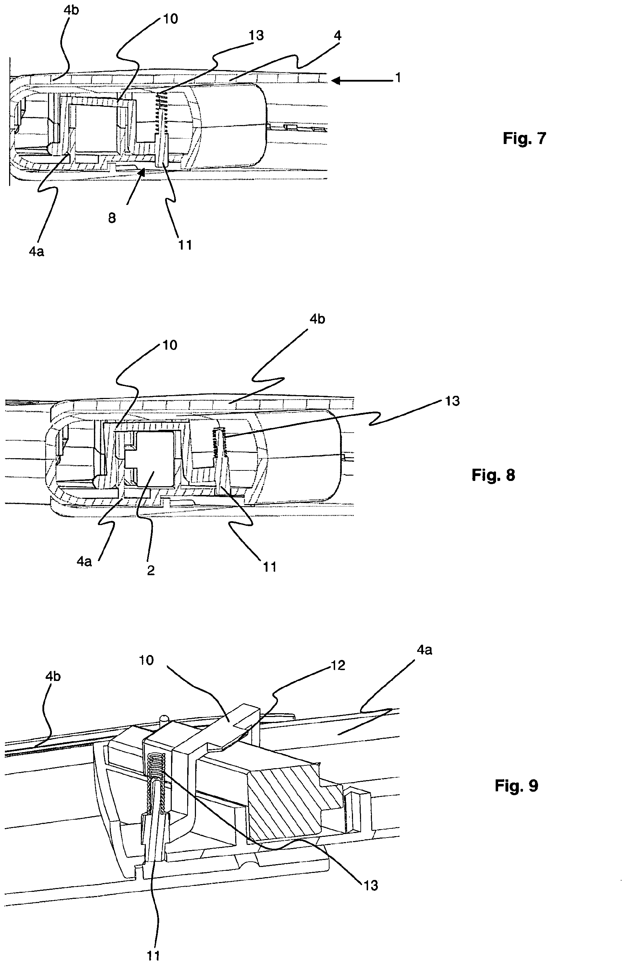

Sur la figure 1, l'étui 4 de la télécommande 1 est fermé et la clé de manoeuvre 2 rangée à l'intérieur de la télécommande 1.
Lorsque l'utilisateur veut utiliser cette télécommande, il ouvre l'étui 4 tel qu'illustré sur les figures 2 et 3, et retire la clé de manoeuvre 2 tel qu'illustré sur la figure 4 afin d'aller introduire cette dernière dans l'interface de commande 3 de l'appareil, tel qu'illustré sur les figures 5 et 6.
Dans cette position de l'étui, il est alors possible d'actionner les boutons 5,6 d'ouverture ou de fermeture de l'appareil.
Lors de l'actionnement de l'un ou l'autre de ces boutons, le dispositif fonctionne selon le séquencement décrit précédemment.
Dans cette position ouverte de la télécommande, il est impossible de fermer l'étui 4 de la télécommande, car sans la présence de la clé de manoeuvre 2, le pont 10 est rappelé en position basse, et l'élément de verrouillage 11 du verrou 8 empêche le coulissement relatif des deux parties 4a, 4b de l'étui 4, tel que ceci est illustré sur la figure 7.
Après usage de la télécommande 1, l'utilisateur replace la clé de manoeuvre 2 dans son emplacement 7 à l'intérieur de l'étui 4, ce qui entraîne le déplacement du pont 10 vers une position haute tel qu'illustré sur les figures 8 et 9, entraînant l'élément de verrouillage 11 dans une position escamotée permettant le coulissement relatif des deux parties 4a,4b de l'étui 4, et donc la fermeture de l'étui 4.

Ainsi, la clé de manoeuvre 2 se range dans le boîtier de la télécommande 1 à la fin de la manipulation et le boîtier ne peut être fermé si la clé n'est pas présente dans son logement, ce qui évite que l'exploitant n'oublie la clé sur le produit et ensuite passe du temps à la retrouver, par exemple dans le cas d'une utilisation sur un site très étendu (par exemple une raffinerie de pétrole).
L'invention permet donc de réaliser au moyen d'un dispositif simple la télécommande à distance sans fil et sans pile d'un appareil électrique tel une cellule moyenne tension, un disjoncteur de puissance, etc...., avec une identification claire de la cellule à manoeuvrer à l'aide d'une clé, rendant les erreurs de commande d'une cellule voisine pratiquement improbables. Ainsi, il est possible de manoeuvrer à distance différents types d'appareils d'un même constructeur en garantissant la commande de l'appareil désiré (et pas un autre), de manière simple et peu onéreuse. Grâce à l'invention, on affecte également la télécommande à une seule personne, ce qui constitue également un avantage garantissant la sureté de la manoeuvre.
On notera également que le connecteur utilisé est avantageusement standard. Ainsi, avec la même télécommande, l'électricien peut manoeuvrer les appareillages moyenne tension ou basse tension ou encore tout dispositif tel que des contrôleurs ou des relais de protection qui agissent sur des disjoncteurs, des interrupteurs que ceux-ci soient aériens ou sous-terrains.

On notera également que le système de transmission sera avantageusement un système de transmission de radio de courte portée, mais celui-ci pourra dans d'autres circonstances, être de l'infra-rouge.

Bien entendu, l'invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont réalisées suivant son esprit.

## Revendications

1. Procédé de commande à distance d'un appareil électrique, **caractérisé en ce qu'**il comporte une première séquence dite de premier actionnement d'un générateur (14) et une seconde séquence dite de second actionnement dudit générateur, **en ce qu'**au cours de la première séquence, l'actionnement du générateur permet de stocker l'énergie du premier actionnement, de mémoriser l'information d'un ordre de commande à envoyer à l'appareil, et au cours de la seconde séquence, le second actionnement du générateur permet de stocker l'énergie de ce second actionnement, d'envoyer l'ordre de commande par l'intermédiaire de l'information d'un ordre de commande à envoyer mémorisée à la première séquence, et d'envoyer l'information de la transmission effective de l'ordre de commande à l'appareil, vers un moyen de signalisation.

2. Procédé de commande selon la revendication 1, **caractérisé en ce que** l'énergie produite lors du premier actionnement du générateur étant E1, l'énergie nécessaire au stockage et à la mémorisation de l'information d'un ordre de commande à envoyer étant E2, l'énergie produite lors du second actionnement du générateur étant E3, l'énergie nécessaire à l'envoi de l'ordre de commande étant E4 et E5 étant l'énergie nécessaire à l'envoi de l'information de transmission effective de l'ordre audit appareil, on a E1+E3 = E2+E4+E5.

3. Procédé de commande selon la revendication 1, **caractérisé en ce que** le générateur d'énergie précité comporte un bouton poussoir (5,6) et **en ce que** ce générateur est actionné lors de l'appui sur ce bouton et est actionné une nouvelle fois lors de la relâche de ce bouton.

4. Procédé de commande selon l'une quelconque des revendications précédentes, **caractérisé en ce que** l'énergie précitée est stockée dans un condensateur (21).

5. Procédé de commande selon l'une quelconque des revendications précédentes, **caractérisé en ce que** l'ordre de commande à l'appareil électrique et l'information de transmission effective de cet ordre à l'appareil, sont transmis au moyen d'un système sans fil.

6. Dispositif de commande pour la mise en oeuvre d'un procédé selon l'une quelconque des revendications 1 à 5, **caractérisé en ce qu'**il comporte un boîtier de commande locale situé à l'intérieur de l'appareil et comportant deux boutons permettant la commande respectivement de l'ouverture ou de la fermeture de l'appareil, un interrupteur à deux positions destiné à autoriser soit la commande locale soit la commande à distance dudit appareil, et un connecteur destiné à recevoir une clé permettant la manoeuvre à distance de l'appareil au moyen d'une télécommande.

7. Dispositif de commande selon la revendication 6, **caractérisé en ce que** les moyens de signalisation précités de l'information de la transmission effective de l'ordre de commande comportent une LED appartenant au boîtier logeant la télécommande.

8. Dispositif de commande selon la revendication 6 ou 7, **caractérisé en ce qu'**il comporte des moyens permettant de réaliser un appairage unique entre la télécommande et sa clé de manoeuvre.

9. Dispositif de commande selon l'une quelconque des revendications 6 à 8, **caractérisé en ce que** le boîtier destiné à loger la télécommande comporte des moyens (8) pour obliger l'opérateur à repositionner la clé de manoeuvre à l'intérieur dudit boîtier après usage.

10. Dispositif de commande selon l'une quelconque des revendications 6 à 9, **caractérisé en ce que** le boîtier de la télécommande (1) est formé par un étui (4) dont l'ouverture permet à la fois de libérer la clé de manoeuvre (2) et d'actionner les boutons (5,6) de la télécommande (1).

11. Dispositif de commande selon la revendication 10, **caractérisé en ce que** l'étui précité (4) comporte des moyens pour empêcher la fermeture dudit étui si la clé de manoeuvre (2) n'est pas replacée préalablement dans son emplacement (7) à l'intérieur de l'étui (4).

12. Dispositif de commande selon l'une quelconque des revendications précédentes, **caractérisé en ce que** l'appareil est une cellule moyenne tension ou bien un disjoncteur de puissance.
